(19) **Europäisches Patentamt**
**European Patent Office**
**Office européen des brevets**

(11) **EP 3 742 675 B1**

(12) **EUROPEAN PATENT SPECIFICATION**

(45) Date of publication and mention
of the grant of the patent:
**31.05.2023 Bulletin 2023/22**

(21) Application number: **20153650.5**

(22) Date of filing: **24.01.2020**

(51) International Patent Classification (IPC):
$G06F\ 16/28^{(2019.01)}$    $G06F\ 16/23^{(2019.01)}$
$G06Q\ 20/40^{(2012.01)}$    $G06Q\ 20/38^{(2012.01)}$
$G06Q\ 20/02^{(2012.01)}$    $H04L\ 43/0823^{(2022.01)}$
$H04L\ 43/0876^{(2022.01)}$    $H04L\ 67/568^{(2022.01)}$
$H04L\ 69/40^{(2022.01)}$

(52) Cooperative Patent Classification (CPC):
**G06F 16/2365; G06F 16/2379; G06F 16/285;
G06Q 20/02; G06Q 20/389; G06Q 20/4016;
H04L 43/0823; H04L 43/0876; H04L 67/568;
H04L 69/40;** G06Q 2220/00

(54) **ACCELERATED PROCESSING APPARATUS FOR TRANSACTION CONSIDERING TRANSACTION FAILURE PROBABILITY AND METHOD THEREOF**

VORRICHTUNG ZUR BESCHLEUNIGTEN VERARBEITUNG VON TRANSAKTIONEN UNTER BERÜCKSICHTIGUNG DER TRANSAKTIONSAUSFALLWAHRSCHEINLICHKEIT UND VERFAHREN DAFÜR

APPAREIL DE TRAITEMENT ACCÉLÉRÉ DES TRANSACTIONS TENANT COMPTE DE LA PROBABILITÉ D'ÉCHEC DES TRANSACTIONS ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2019 KR 20190061176**

(43) Date of publication of application:
**25.11.2020 Bulletin 2020/48**

(73) Proprietor: **Samsung SDS Co., Ltd.
Songpa-gu, Seoul (KR)**

(72) Inventors:
• **LEE, Kyu Sang
Seoul (KR)**

• **YOON, Hwa Yong
Seoul (KR)**
• **OH, Hwa Yong
Seoul (KR)**
• **LEE, Sang Won
Seoul (KR)**
• **SUNG, Ki Woon
Seoul (KR)**

(74) Representative: **Glawe, Delfs, Moll
Partnerschaft mbB von
Patent- und Rechtsanwälten
Postfach 13 03 91
20103 Hamburg (DE)**

(56) References cited:
**CN-A- 109 040 029    US-A1- 2018 300 382**

EP 3 742 675 B1

# Description

## CROSS-REFERENCE TO RELATED APPLICATION

This application claims the benefit of Korean Patent Application No. 10-2019-0061176 filed on May 24, 2019, in the Korean Intellectual Property Office, and all the benefits accruing therefrom under 35 U.S.C. 119.

## BACKGROUND

### 1. Technical Field.

The present disclosure relates to a transaction accelerated processing apparatus considering a transaction failure probability and a method thereof. More specifically, the present disclosure relates to an accelerated processing apparatus for a blockchain transaction based on batch processing considering a transaction failure probability and a method performed in the apparatus.

### 2. Description of the Related Art

A blockchain refers to a data management technique, in which persistently increasing data are recorded in blocks of a specific unit, and each blockchain node constituting a peer-to-peer (P2P) network manages the blocks in a data structure of a chain, or a data structure itself. A blockchain technology can guarantee the integrity and security of transactions through a consensus process, in which all blockchain nodes in a network record and verify transactions.

However, since the consensus process limits the processing power of a network to the processing power of a single node, it is also a major factor that degrades the transaction processing performance of a blockchain-based system. In other words, in a blockchain-based system, even if the number of blockchain nodes is increased, performance improvement of the system cannot be guaranteed. Therefore, it is not practical to introduce a blockchain technology in a field requiring rapid processing of a large amount of transactions, and it is still difficult for a blockchain-based system to replace a legacy

Document US 2018/300382 A1 discloses dynamically variable blockchain parameters.

In conclusion, in order to advance the practical use of a blockchain technology and expand the scope of its application, it is urgently needed to solve a performance issue of a blockchain-based system.

## SUMMARY

An aspect of the present disclosure provides an accelerated processing apparatus for a blockchain transaction based on batch processing and a method performed in the apparatus, which can improve the transaction processing performance of a blockchain-based system.

Another aspect of the present disclosure provides an apparatus, which can minimize risk due to a transaction failure, minimize transaction consensus latency, and maximize transaction processing performance by adjusting a batch size according to a state of blockchain network or traffic amount loaded on a blockchain network, and a method performed in the apparatus.

Another aspect of the present disclosure also provides an apparatus, which can rapidly and accurately determine whether a blockchain network is in a congested state, and a method performed in the apparatus.

The aspects of the present disclosure are not restricted to those set forth herein. The above and other aspects of the present disclosure will become more apparent to one of ordinary skill in the art to which the present disclosure pertains by referencing the detailed description of the present disclosure given below.

According to the present disclosure, an accelerated transaction processing apparatus is provided. The apparatus comprises a memory for storing one or more instructions, a communication interface for communicating with a blockchain network, and a processor. The processor is configured, by executing the one or more instructions, to perform operations including obtaining monitoring information on a transaction failure event occurred in the blockchain network, adjusting a batch size based on the monitoring information, and performing batch processing for one or more individual transactions using the adjusted batch size.

According to the present disclosure, a method for accelerated processing one or more individual transactions associated with a blockchain network performed in a computing device is provided. The method comprises obtaining monitoring information on a transaction failure event occurred in the blockchain network, adjusting a batch size based on the monitoring information, and performing batch processing for the one or more individual transactions using the adjusted batch size.

According to the present disclosure, a computer program stored on a non-transitory computer-readable recording medium is provided. The computer program, when executed by a computing device, performs operations comprising obtaining monitoring information on a transaction failure event occurred in a blockchain network, adjusting a batch size based on the monitoring information, and performing batch processing for one or more individual transactions using the adjusted batch size.

## BRIEF DESCRIPTION OF THE DRAWINGS

The above and other aspects and features of the present disclosure will become more apparent by describing in detail exemplary embodiments thereof with reference to the attached drawings, in which:

FIG. 1 is an exemplary configuration diagram illustrating a blockchain-based transaction processing system according to some embodiments of the present disclosure;

FIG. 2 is an exemplary diagram illustrating batch processing operations of a transaction accelerated processing apparatus according to some embodiments of the present disclosure;

FIG. 3 is an exemplary diagram for describing an interworking relationship between a transaction accelerated processing apparatus and a blockchain node according to some embodiments of the present disclosure;

FIG. 4 is an exemplary block diagram illustrating a transaction accelerated processing apparatus according to some embodiments of the present disclosure;

FIGS. 5 and 6 are exemplary diagrams for describing a process of processing a write type transaction according to some embodiments of the present disclosure,

FIG. 7 is an exemplary diagram for describing a process of processing a read type transaction according to some embodiments of the present disclosure;

FIG. 8 is an exemplary flowchart illustrating a transaction accelerated processing method according to some embodiments of the present disclosure;

FIG. 9 is an exemplary diagram for explaining a cause of a transaction failure event that may be referred to in various embodiments of the present disclosure;

FIG. 10 is an exemplary flowchart for illustrating a detailed process of batch size adjusting step S200 illustrated in FIG. 8;

FIGS. 11 to 13 are diagrams for explaining failure probability based batch size adjusting step S290 illustrated in FIG. 10; and

FIG. 14 illustrates an example computing device that may implement an apparatus in accordance with various embodiments of the present disclosure.

## DETAILED DESCRIPTION OF THE EMBODIMENTS

The present invention will now be described more fully hereinafter with reference to the accompanying drawings, in which preferred embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. The same reference numbers indicate the same components throughout the specification. In the attached figures, the thickness of layers and regions is exaggerated for clarity.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted.

Unless defined otherwise, all technical and scientific terms used herein have the same meaning as commonly understood by one of ordinary skill in the art to which this invention belongs. It is noted that the use of any and all examples, or exemplary terms provided herein is intended merely to better illuminate the invention and is not a limitation on the scope of the invention unless otherwise specified. Further, unless defined otherwise, all terms defined in generally used dictionaries may not be overly interpreted.

Hereinafter, embodiments of the present disclosure will be described in detail with reference to the accompanying drawings.

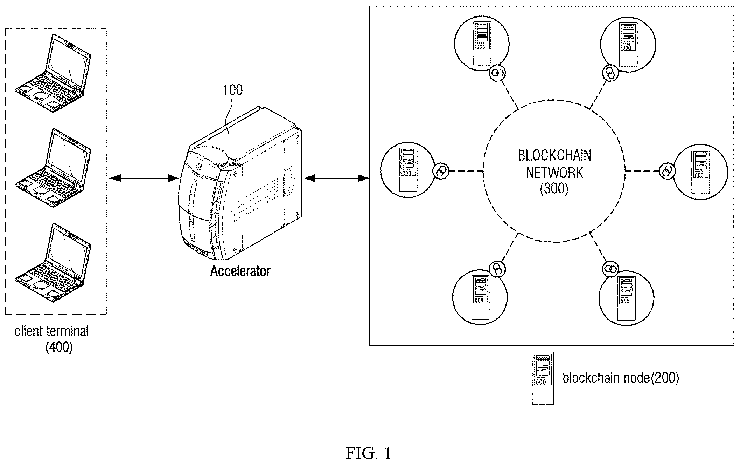

FIG. 1 is an exemplary configuration diagram illustrating a blockchain-based transaction processing system according to some embodiments of the present disclosure.

As shown in FIG. 1, the transaction processing system may include a transaction accelerated processing apparatus 100 and a plurality of blockchain nodes 200 constituting a blockchain network 300. However, this is merely an embodiment for achieving the objectives of the present disclosure, and some components can be added or removed as needed. Further, it should be noted that each component illustrated in FIG. 1 is functionally distinct component and that at least one component can be integrated with each other in an actual physical environment. For example, the transaction accelerated processing apparatus 100, a client terminal 400 and/or the blockchain nodes 200 may be implemented as different logic elements within the same physical computing device. That is, the transaction accelerated processing apparatus 100 may operate as the blockchain nodes 200, and the batch processing function may be implemented on the client terminal 400 side.

Hereinafter, reference number "200" is used to refer to any blockchain node, and in case of distinguishingly referring to blockchain nodes, an alphabet (e.g., a, b, c) is included in reference number "200." Similarly, reference number "400" is also used to refer to any client terminal, and in case of distinguishingly referring to client terminals, an alphabet (e.g., a, b, c) is included in the reference number "400." Further, for convenience of description, the transaction accelerated processing apparatus 100 will be abbreviated as an accelerator.

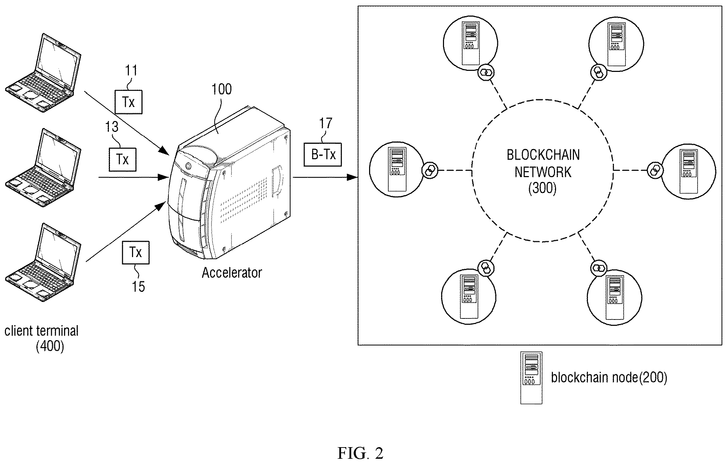

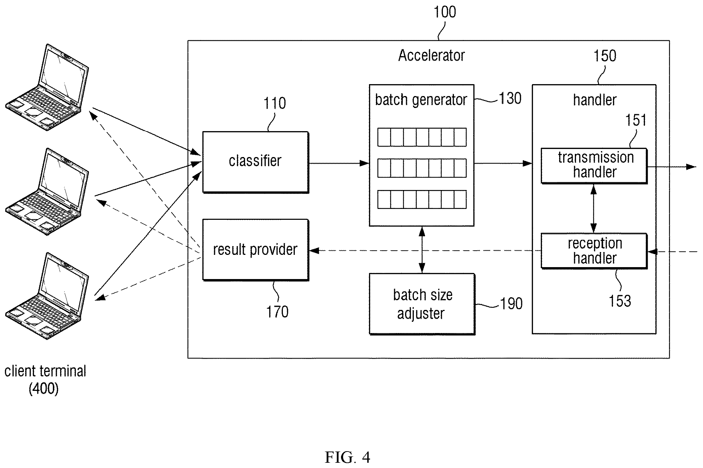

In the transaction processing system, the accelerator 100 is a computing device that performs accelerated processing for a transaction based on batch processing. For example, as shown in FIG. 2, the accelerator 100 generates a batch transaction 17 by aggregating a plurality of individual transactions 11, 13 and 15 requested by the client terminal 400, and batch processes the batch transaction 17 interworking with the blockchain network 300. Further details of the batch processing will be described later with reference to FIGS. 4 to 7.

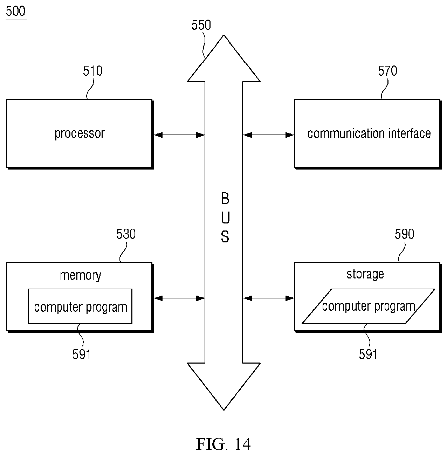

Here, the computing device may be a laptop computer, a desktop, a laptop, or the like, but is not limited thereto, and may include any type of device equipped with a computing function and a communicating function. However, in an environment, in which a large amount of transaction processing is required, the accelerator 100 may be preferably implemented as a high performance server-class computing device. FIG. 14 illustrates an example of the computing device.

According to various embodiments of the present disclosure, the accelerator 100 may adjust a batch size based on at least one of monitoring information on a transaction failure event and load information indicating the number of input transactions.. The batch size may mean a value or parameter for adjusting the number of individual transactions included in a batch transaction.

The accelerator 100 may communicate with all blockchain nodes 200 or communicate with a special node that is responsible for a specific function among the blockchain nodes 200 to obtain the monitoring information and the load information or perform batch processing. The special node may be, for example, an endorsement peer or an anchor peer.

Further, the accelerator 100 may not be implemented as a stand-alone type computing device for only operations of the accelerator, but may be implemented as some software modules in a server device that performs other functions. The software modules are implemented in the form of a library, in which functions of the accelerator according to some embodiments of the present invention will operate as a software calling the library is executed.

Further, the accelerator 100 may be implemented through a computing device that does not perform a server function. For example, the accelerator 100 may be implemented through any type of client computing device equipped with a computing device for performing computing such as a mobile terminal, a tablet, a notebook, a digital TV, a smart wall pad, and a digital door lock. The client computing device should be equipped with a function to connect to a network. Further, the client computing device may be a blockchain node. In this case, the client computing device may be a special purpose blockchain node such as an endorsement peer or an anchor peer, or may be a mere general blockchain node that distributes and stores blockchain data.

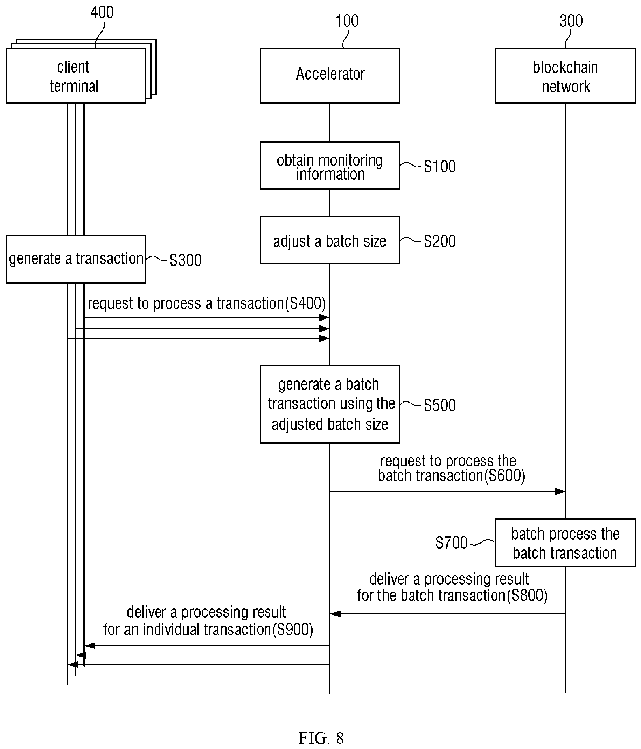

Further details of the present embodiment will be described later with reference to FIGS. 8 to 13.

Further details of the configuration and operation of the accelerator 100 will be described with reference to the drawings following FIG. 4.

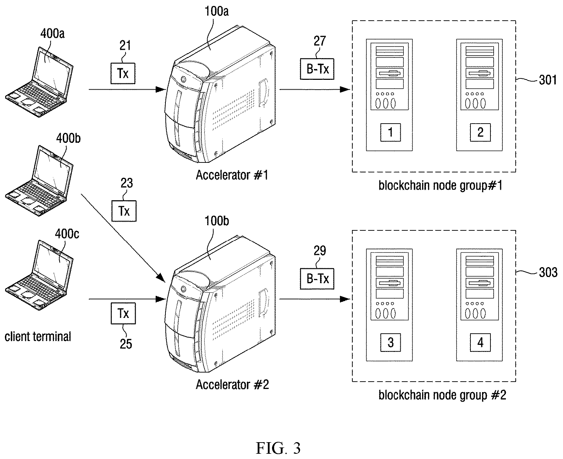

FIG. 1 illustrates that one accelerator 100 is disposed as an example, the number and arrangement of the accelerators 100 may be variously designed and selected according to an embodiment. That is, in some other embodiments, a plurality of accelerators (e.g., 100a, 100b of FIG. 3) may be arranged. By doing so, the performance, stability and availability of the transaction processing system can be further improved. In this case, the interworking relationship between the accelerator 100 and the blockchain node 200 may be configured in various forms as shown in the following embodiments.

In some embodiments, each of the plurality of accelerators 100 is interworked with all blockchain nodes 200, and a transaction requested by the client terminal 400 may be distributed and processed through the plurality of accelerators 100. That is, a transaction requested by the client terminal 400 is distributed to one of the accelerators 100, and the accelerator 100 processes the transaction. In this case, each accelerator 100 can communicate with all blockchain nodes 200 or a special node such as an endorsement peer or an anchor peer among blockchain nodes 200 to obtain the monitoring information and the load information or to perform batch processing. Further, each accelerator 100 may share the monitoring information or the load information with each other for efficient batch processing. In this case, each accelerator 100 may share information through P2P (peer-to-peer) communication, or share information through a shared database, to which the accelerator 100 has read/write permission.

In some other embodiments, as shown in FIG. 3, each of the plurality of accelerators 100a and 100b may interwork with some blockchain nodes 301 or 303. For example, a first accelerator 100a may interwork with a first blockchain node group 301, and a second accelerator 100b may interwork with a second blockchain node group 303. In this embodiment, the accelerators 100a and 100b interwork with their dedicated blockchain node groups 301 and 303 to process requested transactions 21 to 25 in batch form (e.g., 27 and 29). In some embodiments, the first blockchain node group 301 may correspond to a first channel of the blockchain network 300, and the second blockchain node group 303 may correspond to a second channel of the blockchain network 300. That is, dedicated accelerators (e.g., 100a and 100b) may be allocated to each channel of the blockchain network 300. According to an embodiment, a dedicated accelerator 100 may be allocated to each blockchain node 200.

In some embodiments, a certain device (not shown) may provide a list of accelerators (e.g., 100a and 100b of FIG. 3) to the client terminal 400. Further, the device (not shown) may provide load information of each accelerator (e.g., 100a and 100b of FIG. 3) as well. The load information may include the load information (e.g., CPU utilization) of the accelerators (e.g., 100a and 100b of FIG. 3) and the load information of blockchain nodes (e.g., 301 and 303) interworked with each accelerator (e.g., 100a and 100b of FIG. 3). In the present embodiment, the client terminal 400 may select a specific accelerator (e.g., 100a and 100b of FIG. 3) based on the list of accelerators and load information, and a requested transaction can be processed through the selected accelerator (e.g., 100a and 100b of FIG. 3). The function of the device (not shown) may be implemented in the accelerator (e.g., 100a and 100b of FIG. 3), but the technical scope of the present disclosure is not limited thereto.

In the transaction processing system, the blockchain node 200 constitutes the blockchain network 300 having a P2P structure, and is a node operating according to a blockchain protocol. Each blockchain node 200 may manage a ledger. In some embodiments, the ledger may include a blockchain, in which transaction data is recorded, and a state database, in which state data (e.g., state values corresponding to state keys) are stored. However, the technical scope of the present disclosure is not limited thereto. The blockchain node 200 may share various smart contracts and transaction data through a blockchain, and may guarantee the integrity and security of a transaction through a consensus process.

In various embodiments of the present disclosure, the blockchain node 200 may perform batch consensus process for a batch transaction. Specifically, the blockchain node 200 can perform a series of consensus process in batches, such as execution of a smart contract of an individual transaction included in a batch transaction, signature of the execution result of the smart contract, recordation of the signature and the execution result into a block and propagation of them. Since a specific process of the consensus process may vary depending on an implementation method of a blockchain-based system, the technical scope of the present disclosure is not limited to a specific type of consensus process.

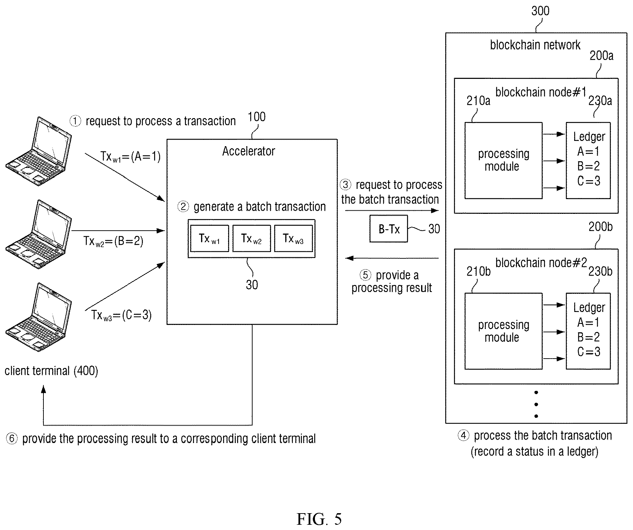

In various embodiments of the present disclosure, the blockchain node 200 may distinguish an execution result of a batch transaction by individual transaction (or by state data) through smart contract-based processing, and use the distinguished execution results to update a ledger. Further details will be described later with reference to FIGS. 5 to 7.

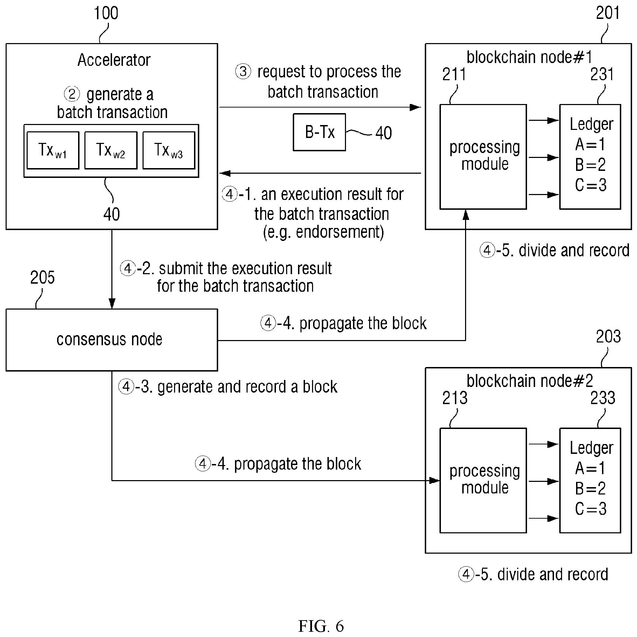

Meanwhile, according to some embodiments of the present disclosure, a plurality of blockchain nodes 200 may be configured with different types of nodes. Further, at least some of the different types of blockchain nodes may perform different operations. For example, a first type of a blockchain node (e.g., an "endorsing peer" of a hyperledger fabric) may execute a smart contract and sign the result of the execution. Further, a second type of blockchain node (e.g., an "orderer" of a hyperledger fabric) may perform a main consensus process on an execution result of a smart contract, or perform operations of recording the execution result into a block and propagating it. Hereinafter, the second type of blockchain node will be referred to as a "consensus node" to distinguish it from the first type of blockchain node. A process of processing a transaction in an environment where a consensus node exists will be described with reference to FIG. 6.

In the transaction processing system, the client terminal 400 is a terminal provided with a processing service for a transaction. The client terminal 400 can generate a transaction, transmit the generated transaction to the accelerator 100 and/or the blockchain network 300, and be provided with a processing result of the transaction from the accelerator 100 and/or the blockchain network 300.

In various embodiments of the present disclosure, the client terminal 400, the accelerator 100 and the blockchain node 200 may communicate through a network. The network may be implemented as any type of wired/wireless network such as a Local Area Network (LAN), a Wide Area Network (WAN), a mobile radio communication network and a Wireless Broadband Internet (Wibro).

So far, the blockchain-based transaction processing system according to some embodiments of the present disclosure has been described with reference to FIGS. 1 to 3. Hereinafter, a configuration of the accelerator 100 and batch processing function according to some embodiments of the present disclosure will be described in detail with reference to FIGS. 4 to 7.

FIG. 4 is an exemplary block diagram illustrating an accelerator 100 according to some embodiments of the present disclosure.

As shown in FIG. 4, an accelerator 100 may include a classifier 110, a batch generator 130, a handler 150, a result provider 170 and a batch size adjuster 190. However, FIG. 4 shows only the components related to the embodiment of the present disclosure. Therefore, it will be appreciated by those skilled in the art that the present disclosure may further include other general purpose components in addition to the components shown in FIG. 4. Further, each component of the accelerator 100 shown in FIG. 4 represents functional elements, which are functionally distinguished, and it is noted that at least one component may be embodied in an integrated form in an actual physical environment.

The classifier 110 classifies individual transactions requested by the client terminal 400 according to a predetermined classification criteria. In this case, the predetermined classification criteria may include an identifier of a smart contract, a channel identifier and/or a type of a transaction, an importance of a transaction, and the like, but is not limited thereto. The type of a transaction may include a write type and a read type. However, the technical scope of the present disclosure is not limited thereto, and a transaction type may be defined in various ways.

More specifically, the classifier 110 may classify each individual transaction by channel, smart contract, transaction type, and/or importance (e.g., classified as a write type transaction using a first smart contract of a first channel), and provide the classification result to the batch generator 130.

Next, the batch generator 130 generates a batch transaction by aggregating a plurality of individual transactions classified by the classifier 110. Specifically, the batch generator 130 inserts each of the classified transactions into a batch queue corresponding to the classification result. For example, the batch generator 130 may insert a first individual transaction classified as a first classification result into a first batch queue, and insert a second individual transaction classified as a second classification result into a second batch queue. Further, the batch generator 130 may aggregate individual transactions included in the specific batch queue and generate a batch transaction in response to determining that a specific batch queue (e.g., a first batch queue or a second batch queue) satisfies a predetermined batch generating condition.

In some embodiments of the present disclosure, each batch queue may have the same batch size. That is, a global batch size that is applied to all batch queues in batches may be applied to some batch queues or to all batch queues in some embodiments of the present disclosure. The global batch size may be determined using at least some of the number of input transactions entering into a system as a whole and monitoring information on whether a blockchain network is congested.

Further, some batch queues may have a batch size specific to the batch queue rather than the global batch size. The batch size specified to the batch queue may be determined using the number of input transactions entering into the batch queue, or may be obtained by adjusting the global batch size based on the number of input transactions entering into the batch queue.

The batch queue refers to a place for storing a transaction until a batch transaction is generated, and may be understood as a kind of transaction buffer or transaction pool. As can be understood from the name of a buffer queue, the batch queue may be implemented as a queue-based data structure, but since a method of implementing a batch queue may vary, the technical scope of the present disclosure is not limited to the method of implementing the batch queue.

In various embodiments of the present disclosure, the predetermined batch generating condition may include at least one of conditions based on whether a batch timer expires, a batch size (i.e., the number of transactions), a data size of the entire transaction, presence of association between transactions, and the like. Hereinafter, for convenience of understanding, a process of generating a batch transaction according to each batch generating condition will be further described.

In a first embodiment, the batch generator 130 may generate a batch transaction by aggregating individual transactions of a specific batch queue in response to an expiration event of a batch timer. In this case, the batch timer may exist for each batch queue, but the scope of the present disclosure is not limited thereto. A timer period of each batch queue may be the same or may be different. For example, a timer period of a high priority batch queue may be set relatively short, and a timer period of a low priority batch queue may be set relatively long. Through this process, a differential transaction processing service can be provided. According to this embodiment, a transaction waiting time according to batch processing may be limited within a predetermined time (e.g., a batch timer period). Therefore, the problem of delaying processing of some individual transactions due to batch processing can be alleviated.

In a second embodiment, the batch generator 130 may generate a batch transaction in response to determining that a data size of all transactions included in a particular batch queue is greater than or equal to a threshold value. In this case, the data size of all transactions may be calculated as the sum of data sizes of individual transactions, and the data sizes of the individual transactions may mean, for example, the size of transaction data recorded in a blockchain. However, the scope of the present disclosure is not limited thereto. The threshold value may be a predetermined fixed value or a variable value that varies depending on a situation. For example, the threshold value may be a fixed value set based on the maximum size of a block. For another example, the threshold value may be a fixed value or a variable value set based on the priority of a corresponding batch queue. For another example, the threshold value may be a variable value that is set to a larger value as load of the batch generator 130 increases. According to the present embodiment, since it can be prevented that too much data is included in one batch transaction, a processing failure probability of a batch transaction can be reduced.

In a third embodiment, the batch generator 130 may generate a batch transaction in response to determining that the number of individual transactions included in a particular batch queue satisfies a batch size. In this case, the batch size may be variably adjusted, and further details will be described later with reference to FIGS. 8 to 13.

In a fourth embodiment, the batch generator 130 may generate a batch transaction based on associations between individual transactions. Specifically, the batch generator 130 determines whether an associated transaction of a particular transaction exists. In this case, the associated transaction refers to a transaction, which has association with the particular transaction, and may be, for example, a transaction including an identification key (i.e., a state key) of the same state data as the particular transaction (e.g., a transaction causing an MVCC conflict). That is, transactions that access the same state data as the particular transaction may be determined as an associated transaction having association with the particular transaction. When it is determined that an associated transaction exists, the batch generator 130 may perform batch processing in various forms. Specific examples are as follows.

In a first aspect of a fourth embodiment, the batch generator 130 may generate a first individual transaction and a second individual transaction, in which association exists, as different batch transactions and process them.

In a second aspect of a fourth embodiment, the batch generator 130 may generate a batch transaction based on the remaining individual transactions except for a first individual transaction and a second individual transaction, in which association exists, and separately process the first individual transaction and the second individual transaction.

In a third aspect of a forth embodiment, among a first individual transaction and a second individual transaction, in which association exists, the batch generator 130 may process the first individual transaction in batches and separately process the second individual transaction. That is, the batch generator 130 may batch process some of a plurality of individual transactions, in which association exists, within a range of not occurring conflict of transactions.

In a fourth aspect of a fourth embodiment, the batch generator 130 may determine whether a first individual transaction and a second individual transaction, in which association exists, can be combined and generate a third individual transaction by combining the first individual transaction and the second individual transaction in response to determining that they can be combined. Here, if an execution result of the third individual transaction is the same as a result of executing the first individual transaction and the second individual transaction, a method of generating the third individual transaction may be performed in any manner. Further, the third individual transaction may be processed in a batch form or may be processed separately.

According to the embodiments described above, batch processing may be performed within the range of not occurring conflict in consideration of association between transactions. Accordingly, the problem that the stability of transaction processing is lowered can be alleviated. In the above embodiment, for convenience of understanding, it has been described on the assumption that there is association between two transactions, but those skilled in the art could easily understand that if there is association between three or more transactions, it can be processed in the same or a similar manner.

In a fifth embodiment, the batch generator 130 may generate a batch transaction based on various combinations of the embodiments described above. For example, the batch generator 130 may generate a batch transaction further using a batch timer as well as a batch size. Specifically, the batch generator 130 may generate a batch transaction in response to determining that the number of individual transactions of a particular batch queue is greater than or equal to a batch size. Further, even when the number of individual transactions of the particular batch queue is less than a batch size, the batch generator 130 may generate a batch transaction in response to an expiration event of a batch timer. By doing so, transaction processing performance can be improved while minimizing processing delay due to batch processing.

Next, a handler 150 processes an individual transaction or a batch transaction in batches interworking with the blockchain network 300. The handler 150 may include a transmitting handler 151 and a receiving handler 153.

The transmitting handler 151 performs overall transmission of data such as a batch transaction. Specifically, in response to generating a batch transaction, the transmitting handler 151 may deliver the generated batch transaction to the blockchain network 300. Further, the transmitting handler 151 may further perform operations such as transmitting an execution result of a batch transaction signed by a blockchain node (e.g., an endorsement result) to a consensus node or retrying a batch transaction, which failed in processing.

The receiving handler 153 performs overall processing on data received from the blockchain network 300, such as a processing result of a batch transaction. Specifically, the receiving handler 153, in response to receiving a processing result for an individual transaction or a batch transaction, provides the processing result to a result provider 170. Further, the receiving handler 153 may further perform operations such as receiving a processing result of a signed batch transaction from the blockchain network 300 and delivering it to the transmitting handler 151.

Further details of the handler 150 will be described with reference to FIGS. 5 to 7.

Next, the result provider 170 receives a processing result for an individual transaction or a batch transaction from the receiving handler 153, and provides the processing result to the client terminal 400. More specifically, the result provider 170 may distinguish the processing result for a batch transaction by individual transaction unit, and provide the distinguished processing result to each client terminal 400. For example, the result provider 170 may generates a reference table composed of an identifier of the client terminal 400, a transaction identifier, an address of the client terminal 400, and the like, and uses the reference table to provide the processing result of each transaction to the client terminal 400. However, the technical scope of the present disclosure is not limited thereto.

Next, the batch size adjuster 190 adjusts a batch size based on whether the blockchain network 300 is in a congested state. Further, the batch size adjuster 190 may activate or deactivate a batch processing function. Here, deactivation of the batch processing function may be performed by setting a batch size to "1," but may be performed in any other way.

In order to exclude the redundant description, further details of an operation of the batch size adjuster 190 will be described with reference to the drawings following FIG. 8.

Each component 110 to 190 shown in FIG. 4 may refer to a software or a hardware, such as a Field Programmable Gate Array (FPGA) or an Application-Specific Integrated Circuit (ASIC). However, the components are not limited to a software or a hardware, and may be configured to be in an addressable storage medium, or may be configured to execute one or more processors. The functions provided in the above components may be implemented by more divided components, or may be implemented as one component that performs a specific function by combining a plurality of components.

Meanwhile, in some other embodiments of the present disclosure, the batch processing function of the accelerator 100 may be implemented on the client terminal 400 side. For example, when the client terminal 400 generates a plurality of individual transactions, it can aggregate the plurality of individual blockchain transactions and generate a batch transaction by itself. As another example, when a particular client terminal 400 receives a plurality of individual transactions from another client terminal, it can aggregate the plurality of individual transactions and generate a batch transaction.

Hereinafter, for convenience of understanding, a process, in which a write type transaction and a read type transaction are processed through the accelerator 100, will be described with reference to FIGS. 5 to 7. FIGS. 5 to 7 show an example, in which a batch size is "3".

FIG. 5 illustrates a process, in which a write type transaction is processed according to some embodiments of the present disclosure.

As illustrated in FIG. 5, an accelerator 100 may generate a batch transaction 50 by aggregating a plurality of write type transactions Txw1, Txw2, and Txw3 ((1), (2)). Specifically, according to a classification result of a classifier 110, a batch generator 130 may insert write type transactions Txw1, Txw2, and Txw3 into the same batch queue and generate a batch transaction 50 in response to determining that the number of write type transactions Txw1, Txw2, and Txw3 inserted into the batch queue satisfies a batch size.

Next, the accelerator 100 may request a blockchain network 300 to process the batch transaction 50 ((3)). Then, the blockchain nodes 200a and 200b constituting the blockchain network 300 can perform a consensus process for the batch transaction 50 and display an execution result of the batch transaction 50 on ledgers 230a and 230b (④).

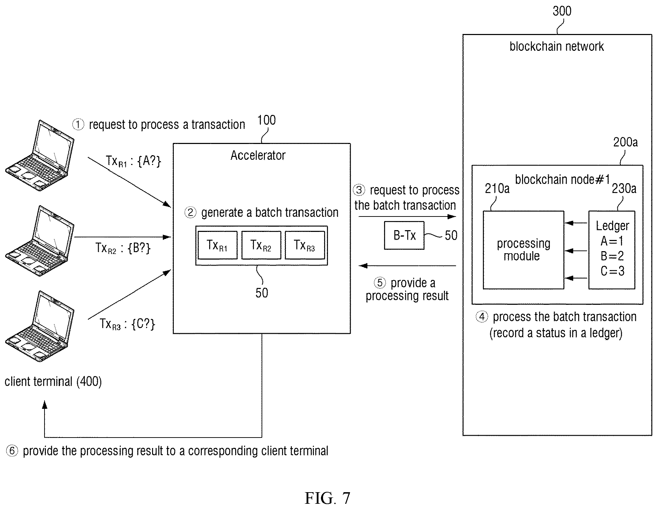

As shown in FIG. 5, each blockchain node 230a and 230b may include processing modules 210a and 210b for processing the batch transaction 50. The processing modules 210a and 210b can distinguish the execution result of the batch transaction 50 by transaction (or by state data) using a smart contract, and update a ledger (e.g., a blockchain, a state DB) based on the distinguished execution result. In this case, the execution result of the batch transaction 50 may include a signature of a blockchain node, an identifier of an individual transaction, identification keys (A, B, C) and values (1, 2, 3) of state data, and the like. Accordingly, the processing modules 210a and 210b may distinguish the execution result of the batch transaction 50 by transaction (or by state) using the identification keys A, B, and C and/or the identifier of a transaction. In addition, the processing modules 210a and 210b may further process a batch transaction generated based on a read type transaction, which will be described later with reference to FIG. 7.

Next, the accelerator 100 may receive a processing result for the batch transaction 50 from the blockchain network 300 and provide the received processing result to a corresponding client terminal 400 ((5), ⑥).

In this case, when the processing result indicates a failure, a handler 150 of the accelerator 100 may retry processing of the batch transaction 50.

FIG. 6 illustrates a process, in which a write type batch transaction is processed in a blockchain-based system where a separate consensus node, such as a hyperledger fabric, exists.

As shown in FIG. 6, an accelerator 100 may generate a batch transaction 40 and transmit the generated batch transaction 40 to a blockchain node 201 ((2), (3)). Further, the accelerator 100 may receive an execution result of the batch transaction 40 from the blockchain node 201 (④-1). The execution result may include, as described above, a signature of the blockchain node 201 for the batch transaction 40, identification keys (A, B, C) and values (1, 2, 3) of state data, and the like.

Next, the accelerator 100 may submit the received execution result to a separate consensus node 205 (④-2). The consensus node 205 then may verify the batch transaction 40 based on the execution result of the blockchain node 201, record the execution result on a new block, and propagate the new block on the blockchain network 300. ((4)-3, ④-4). Finally, each blockchain node 201, 203 receiving the new block may distinguish the execution result of the batch transaction 40 by transaction (or state data) through a processing module 211, and update a ledger based on the distinguished execution result (④-5).

As described with reference to FIGS. 5 and 6, when a transaction is processed through the accelerator 100, a plurality of transactions may be batch processed through batch processing. That is, a consensus process is not performed in the unit of an individual transaction, but the consensus process is performed in the unit of a batch transaction so that a plurality of transactions may be batch processed. Accordingly, transaction processing performance can be greatly improved. In an ideal environment, transaction processing performance would be improved in proportion to a batch size.

Hereinafter, a process of processing a read type transaction according to some embodiments of the present disclosure will be described with reference to FIG. 7.

As shown in FIG. 7, the accelerator 100 may generate a batch transaction 50 by aggregating read type transactions TxR1, TxR2 and TxR3 and request the blockchain network 300 to process the batch transaction 50 (①, (2), (3)).

A blockchain node 200a receiving the request may distinguish the batch transaction 50 by transaction (or by state data) through a processing module 210a and query state data (A, B, C) recorded in a ledger (④). The distinguishing process may be performed through a smart contract based on transaction identifiers and/or identification keys (A, B, C) of state data.

Next, the accelerator 100 may receive the processing result (that is, the value of the inquired state data) of the batch transaction 50 from the blockchain node 200a and provide the processing result to a corresponding client terminal 400. ((5), (6)).

In this case, when the processing result indicates a failure, the handler 150 of the accelerator 100 may retry processing of the batch transaction 50.

So far, the process of processing a read type transaction through the accelerator 100 has been described with reference to FIG. 7. As described above, since a plurality of read type transactions can be batch processed in a batch form, transaction processing performance can be greatly improved.

So far, the configurations and the batch processing functions of the accelerator 100 according to some embodiments of the present disclosure have been described with reference to FIGS. 5 to 7. Hereinafter, a batch size adjusting function will be described in detail with reference to FIGS. 8 to 13.

FIG. 8 is an exemplary flowchart illustrating a transaction accelerated processing method according to some embodiments of the present disclosure. FIG. 8 illustrates a flow, in which a transaction accelerated processing method is performed in the system illustrated in FIG. 1. However, this is only a preferred embodiment for achieving the object of the present disclosure, and some steps can be added or deleted as necessary.

As shown in FIG. 8, the transaction accelerated processing method starts at step S100 of obtaining monitoring information on a blockchain network 300. The monitoring information may include processing time (i.e., response time) of a transaction (e.g., a batch transaction), information on a transaction failure event, and the like. In addition, the monitoring information may further include various information for determining whether the blockchain network 300 is in a congested state.

The processing time may refer to the total time required for an individual transaction to be processed through an accelerator 100 and the blockchain network 300. Therefore, the processing time may include a time, for which an individual transaction waits in a batch queue of the accelerator 100 and a time, for which a batch transaction is processed.

The transaction failure event is generated when a transaction process fails in the blockchain network 300 (e.g., consensus failure), and its cause may vary. For example, it can be a transaction verification (or approval) failure (e.g., an endorsement failure) due to an unsatisfied condition of a smart contract, a consensus failure due to a Multi Version Concurrency Control (MVCC) conflict and a transaction failure due to transaction timeout. Hereinafter, for convenience of understanding, causes of occurrence of a transaction failure event will be briefly introduced.

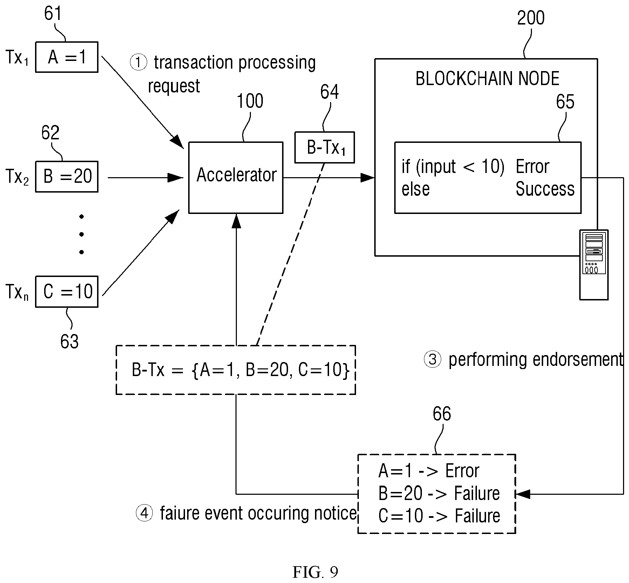

An example, in which a transaction failure event occurs due to a transaction verification failure is illustrated in FIG. 9. As shown in FIG. 9, it is assumed that the accelerator 100 generates a batch transaction 64 by aggregating three separate transactions 61 to 63 (1). Further, it is assumed that a predetermined condition (e.g., input < 10) is set in a smart contract 65 associated with a batch transaction 64 (2). Then, a blockchain node 200 may try to process the batch transaction 64 by executing the smart contract 65 (e.g., endorsement process of verifying and signing an execution result of a transaction in a hyperledger (3)). In this case, there may be a case, where the content of the batch transaction 64 does not satisfy the condition of the smart contract 65 (*see* 66). In this case, a transaction failure event occurs due to a transaction verification (or approval) failure, and the blockchain node 200 may notify the accelerator 100 of the transaction failure event (④).

Next, a consensus failure due to a MVCC conflict may occur when transactions that cause a MVCC conflict (e.g., transactions that cause a change in the same state data) are included in the same block. Since a conflict problem of a MVCC is obvious to those skilled in the art, it will not be described.

Next, transaction timeout may mean a case, in which transaction processing time exceeds a predetermined time due to a failure of the blockchain node 200. Transaction timeout, unlike the causes of occurrence described above, can consistently cause transaction failures. For example, if a failure occurs in the blockchain node 200, processing of all transactions, which the corresponding blockchain node 200 is in charge of, will fail until the failure is recovered. Therefore, if a transaction failure event occurs due to transaction timeout, batch size adjustment needs to be performed to focus more on minimizing a risk of failure, which will be described later.

The following will be described with reference to FIG. 8 again.

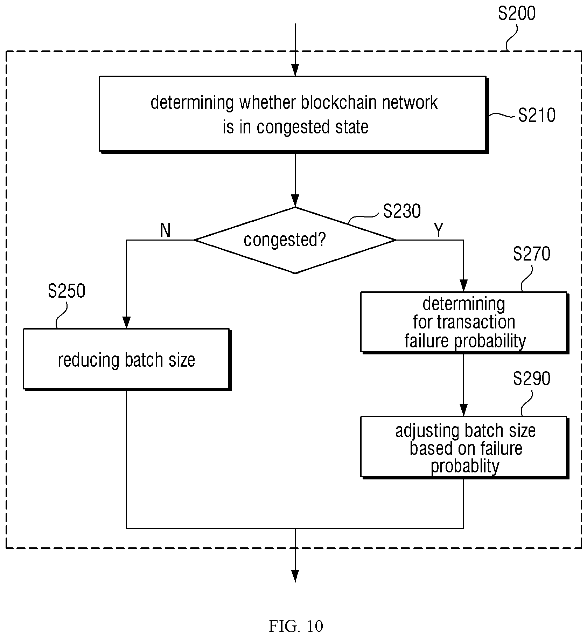

At step S200, a batch size is adjusted based on monitoring information. Detailed processes of this step will be described later with reference to FIGS. 10 to 13.

At steps S300 to S900, batch processing for one or more individual transactions requested by the client terminal 400 is performed using the adjusted batch size. The batch processing was described above with reference to descriptions of FIGS. 4 to 7.

Hereinafter, detailed processes of the batch size adjusting step S200 will be described with reference to FIG. 10.

FIG. 10 is an exemplary flowchart illustrating detailed processes of the batch size adjusting step S200 according to some embodiments of the present disclosure.

As shown in FIG. 10, at step S210, it is determined whether the blockchain network 300 is in a congested state using monitoring information. The specific method of determining whether the blockchain network 300 is in a congested state may vary depending on an embodiment.

In some embodiments, the determination may be performed based on whether generation of a new block is delayed. That is, if generation of a new block is delayed, it may be determined that the blockchain network 300 is in a congested state, and in the opposite case, may be determined to be in a normal state (i.e., not congested state). Whether generation of a new block is delayed may be determined using a predetermined block generation waiting time. For example, if the time taken to generate a new block exceeds the block generation waiting time, it may be determined that generation of the new block is delayed. For another example, if a transaction processing time exceeds the block generation waiting time, it may be determined that generation of the new block is delayed. This is because the transaction processing time includes the time taken to generate a new block.

The block generation waiting time may mean the maximum time waiting for the blockchain network 300 to generate a block, and if a size of transaction data satisfies a block size, the blockchain network 300 can generate a new block even before the block generation waiting time expires.

In some other embodiments, the determination may be determined based on an inflection point, at which the trend of transaction processing time is diverted. The trend information may be obtained by analyzing or processing monitoring information on the blockchain network 300. Specifically, when the number of input transactions increases, the transition of the transaction processing time from a decreasing trend to an increasing trend may mean that the blockchain network 300 entered a congested state. This is because the fact that the transaction processing time has shifted to an increasing trend means that the current TPS has exceeded the limit transaction throughput of the blockchain network 300. Therefore, a state of the blockchain network 300 may be determined based on the inflection point, at which the trend of transaction processing time is diverted. Transaction Per Second (TPS), for example, can be exemplarily used as the unit of the number of input transactions.

At step S230 and step S250, in response to determining that the blockchain network 300 is not in a congested state, a batch size may be reduced. Alternatively, a batch processing function may be deactivated.

If the blockchain network 300 is not congested, transaction processing time may decrease as TPS increases. This is because increasing TPS satisfies a block size quickly, and a new block can be generated even before a block generation waiting time expires. Further, if batch processing is performed when the blockchain network 300 is not congested, the transaction processing time may rather increase. This is because, when performing batch processing, the time taken to generate a batch transaction (e.g., the time that an individual transaction waits in a batch queue before satisfying a batch size) should be further included in the transaction processing time. Thus, if the blockchain network 300 is not in a congested state, reducing a batch size or deactivating a batch processing function may be more effective for quick response.

At step S230, step S270 and step S290, in response to determining that the blockchain network 300 is in a congested state, a failure probability of a transaction is determined, and a batch size is adjusted based on the failure probability. That is, when the blockchain network 300 is in a congested state, an optimal batch size may be determined in consideration of a failure probability of a transaction instead of randomly increasing a batch size. This may be understood to minimize risk due to a transaction failure (e.g., retrying cost). This will be explained in detail. The larger a batch size, the more transactions will be included in a single batch. When a failure probability for each transaction is considered, the larger a batch size, the higher a failure probability for the batch. Therefore, the larger a batch size, the greater the risk due to a transaction failure.

At step S270, a failure probability of a transaction may be continuously updated whenever a transaction failure event occurs. Also, at this step, a specific method of determining a failure probability of a transaction may vary depending on an embodiment.

In some embodiments, the failure probability may be calculated based on the number of failed transactions relative to the total number of individual transactions. For example, assume that the number of individual transactions is nine, a batch size is three, and three batch transactions have been generated. Also, assume that one of the three batch transactions has failed. In such a case, a failure probability may be determined to be 3/9. In this embodiment, a failure probability can be calculated by a simple method, and because a failure probability increases as a batch size becomes larger, a reasonable failure probability can be calculated in consideration of a batch size.

In some other embodiments, a failure probability distribution of a transaction is estimated, and a current transaction failure probability (e.g., mean failure probability) may be determined based on the estimated probability distribution. The probability distribution may be estimated from an occurrence frequency of a transaction failure event, an occurrence pattern, and the like. The probability distribution may be understood as modeling of an occurrence pattern of transaction failure events observed so far as a result of blockchain monitoring.

For example, if there is almost no change in the number of transaction failure events occurring per unit time, the probability distribution may be estimated as uniform distribution. As another example, when the occurrence pattern of the transaction failure event has a characteristic of Poisson distribution (e.g., a failure probability of a specific interval is proportional to the size of the interval), the probability distribution may be estimated as Poisson distribution. As another example, when the occurrence pattern of the transaction failure event has a characteristic of normal distribution, the probability distribution may be estimated as normal distribution defined as an average and a variance.

According to this embodiment, by considering a probability distribution, a failure probability of a transaction can be determined more accurately. For example, an optimal batch size may be obtained through simulation based on the probability distribution.

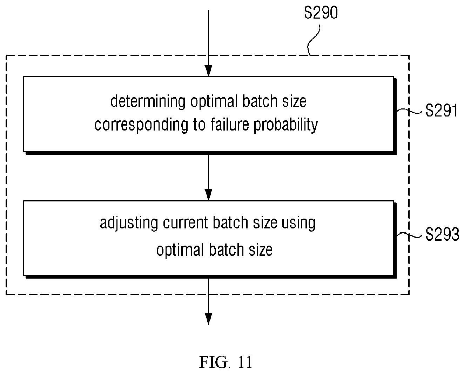

Detailed processes of step S290 are shown in FIG 11. Hereinafter, it will be described with reference to FIG. 11.

As shown in FIG. 11, at step S291, an optimal batch size corresponding to the failure probability determined at the previous step S270 is determined. The optimal batch size is a batch size that can maximize efficiency according to batch processing in consideration of a failure probability, and may mean a value that is a reference for batch size adjustment. At this step, a specific method of determining the optimal batch size may vary depending on an embodiment.

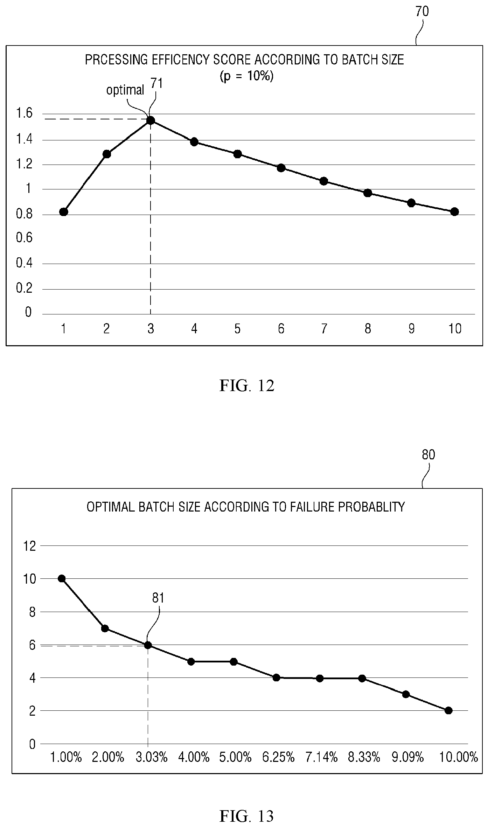

In some embodiments, a simulation may be performed that changes a failure probability and derives an optimal batch size according to a batch size. Hereinafter, for convenience of explanation, a failure probability used in a simulation process will be referred to as an "expected failure probability". Further, among a plurality of optimal batch sizes for each expected failure probability (i.e., simulation result values), an optimal batch size corresponding to the failure probability determined at step S270 may be determined. The simulation may be preferably performed in advance, but the technical scope of the present disclosure is not limited thereto and may be performed in real time. For convenience of understanding, the simulation process will be described in detail with reference to FIGS. 12 and 13.

As shown in FIG. 12, an optimal batch size corresponding to each expected failure probability may be determined based on a processing efficiency score. In particular, graph 70 of FIG. 12 illustrates a processing efficiency score according to a batch size calculated when an expected failure probability is "10%."

The processing efficiency score may be calculated according to, for example, Equation 1 below. In Equation 1 below, Efficiency indicates a processing efficiency score, NTX indicates the total number of individual transactions to be processed (i.e., the total amount of transactions), and CTX indicates processing cost according to batch processing (that is, the total number of batch transactions). Further, NFailed refers to processing cost according to a failed batch transaction, and when individual transactions included in a failed batch transaction are individually retried, NFailed may refer to the total number of failed individual transactions (that is, the total number of individual transactions to be retried).

<Equation 1>

$$\text{Efficiency} = \text{NTX}/(\text{CTX} + \text{NFailed})$$

A specific example of calculating a processing efficiency score is as follows. Suppose that the total number of individual transactions is 90 (that is, NTX = 90), a batch size is 3, and an expected failure probability is 10%. The CTX then becomes 30 (90/3 = 30).

NFailed may be determined based on a probability distribution of the transaction failure event. For example, FIG. 12 assumes a situation, in which the probability distribution of the transaction failure event has uniform distribution, and NFailed is applied when one transaction fails uniformly per ten transactions. In this case, nine batch transactions out of 30 batch transactions fail, and as a result, the value of NFailed can be calculated as (9*3 = 27). Therefore, the processing efficiency score can be calculated as 90/(30+27) = about 1.57.

If the probability distribution of the transaction failure event has normal distribution or Poisson distribution, the value of NFailed would be calculated differently in the same situation as FIG. 12, in which the total number of individual transactions is 90, the batch size is 3, and the expected failure probability is 10%. This means that even if only one of transactions belonging to a batch process fails, all transactions belonging to the batch process should be retried. This is because the number of batch transactions that fail is calculated differently depending on a probability distribution of a transaction failure event even if a failure probability of each transaction is fixed.

When an expected failure probability is 10%, graph 70 as shown in FIG. 12 can be obtained by calculating a processing efficiency score as in the above example while changing a batch size. Further, a batch size of point 71, at which the processing efficiency score is highest, may be determined as an optimal batch size of a corresponding expected failure probability.

For reference, if an expected failure probability is 0%, since NFailed will be 0, a processing efficiency score may be calculated according to Equation 2 below, and the processing efficiency score would be calculated with a higher value as a batch size becomes larger.

<Equation 2>

$$\text{Efficiency} = \text{NTX}/\text{CTX}$$

Conceptually, the numerator of Equation 2 may mean an amount of individual transactions to be processed, and the denominator of Equation 1 may mean transaction processing cost reflecting a batch size and a failure probability. That is, Equation 1 may be understood as formulated processing cost compared to the amount of transactions to be processed, and Equation 1 may be modified in any other form within the range representing the above concept.

When an optimal batch size of each expected failure probability is calculated by varying the expected failure probability, graph 80 as illustrated in FIG. 13 may be obtained. Point 81 of graph 80 indicates that an optimal batch size is "6" when the expected failure probability is "3%." Therefore, if a current failure probability is determined as "3%" according to monitoring information of a transaction failure event and a batch size is adjusted using graph 80, the batch size may be adjusted to "6".

In some other embodiments, processing efficiency scores for a plurality of batch sizes can be calculated directly based on the failure probability of step S270, without obtaining an optimal batch size for an expected failure probability in advance. Further, a batch size having the highest processing efficiency score among the plurality of batch sizes may be determined as an optimal batch size.

For reference, if a failure probability is "0," an optimal batch size may be a predetermined maximum batch size. If no transaction failure occurs, batch processing efficiency increases as a batch size becomes larger.

Again, it will be described with reference to FIG. 11.

At step S293, a current batch size is adjusted using a determined optimal batch size. For example, the determined optimal batch size can be set to the current batch size.

Meanwhile, in some other embodiments of the present disclosure, an optimal batch size may not be determined according to a processing efficiency score, but the optimal batch size corresponding to a current failure probability may be predicted through a machine learning model. The machine learning model may be a model that learns a relationship between predetermined feature data and an optimal batch size. Further, the feature data may include a transaction failure probability, a probability distribution of the failure probability, an occurrence pattern of a transaction failure event, and the like, but is not limited thereto and may further include various features. In this embodiment, a predicted batch size may be obtained by extracting feature data associated with the machine learning model from monitoring information on a transaction failure event and inputting the extracted feature data into the machine learning model. Further, a batch size of the accelerator 100 may be adjusted based on the predicted batch size.

Further, according to some embodiments of the present disclosure, when a transaction failure event occurs due to transaction timeout (e.g., timeout due to a node failure), a batch size can be adjusted in at least some different methods than other causes (e.g., MVCC conflict, transaction verification failure, etc.). As described above, when timeout occurs, there is a high probability that transaction failure events continuously occur.

More specifically, when a transaction failure event occurs due to the other causes, a batch size may be adjusted as described above with reference to FIGS.

10 to 13. And, in the case of transaction timeout, a batch size may be adjusted based on at least one of the following examples. As an example, the failure probability determined at step S270 may be adjusted upward, and a batch size may be adjusted based on the adjusted failure probability. That is, in this example, the batch size is adjusted to a smaller value by increasing the failure probability, which can be understood to sufficiently reduce the risk due to a transaction failure. In another example, a batch size may be reduced or batch processing function may be deactivated regardless of a failure probability, which can be understood to minimize the risk due to continuous transaction failures.

So far, the transaction accelerated processing method and the batch size adjustment function considering a transaction failure probability according to some embodiments of the present disclosure have been described in detail with reference to FIGS. 8 to 13. As described above, a batch size is adjusted based on whether the blockchain network 300 is in a congested state, thereby improving overall transaction processing speed and consensus delay time. Further, by adjusting a batch size in consideration of a failure probability, the risk due to a transaction failure can be reduced. In particular, since the method described above is performed by a separate accelerator 100, an internal logic of a blockchain-based system does not need to be modified. Therefore, excellent portability can be provided, and it can be widely utilized in various blockchain-based systems.

According to some other embodiments of the present disclosure, the adjustment of a batch size may be adjusted by simultaneously reflecting a current congested state of a blockchain network and the number of input transactions. In this case, a batch size adjusted based on the embodiment referenced with FIGS. 8 to 13 may be further adjusted by reflecting the number of input transactions.

For example, if the number of input transactions is less than a block size of a terminal requesting transaction processing, a batch size may be adjusted to be further reduced. For example, if a block size of a terminal requesting transaction processing is 10 and the number of input transactions (e.g., TPS) is less than 10, the adjusted batch size may be further reduced or adjusted to one. Conversely, if the number of input transactions exceeds a block size of a terminal requesting transaction processing, the adjusted batch size may be further adjusted to more increase.

According to some other embodiments of the present disclosure, the adjustment of a batch size may be performed based merely on the number of input transactions, regardless of a current congested state of a blockchain network. The number of input transactions may be determined as, for example, a Transaction Per Second (TPS) value. For example, even if a blockchain network is currently congested, and if the number of entering transactions is small, a state of the blockchain network is likely to change to a less congested state in the future, thus there is no reason to increase a batch size. That is, the present embodiment may be understood as adjusting a batch size in a direction to prepare for a future state in consideration of the fact that a future congested state is changed by the number of entering transactions.

Further, in a situation where a plurality of accelerators are operated, even if a blockchain network is in a congested state due to a large number of transactions entering into other accelerators, a batch size of a specific accelerator does not need to be increased unless there are many transactions entering into the specific accelerator. For this reason, the adjustment of a batch size may be performed merely based on the number of input transactions, regardless of a current congested state of a blockchain network. Further, when a plurality of accelerators are operated, the adjustment of a batch size may be performed separately for each accelerator.

According to the present embodiment, a batch size may be determined using a block size of a transaction processing orderer and the number of entering transactions. For example, if the number of input transactions is less than a block size of a transaction processing orderer, a batch size may be adjusted to decrease. For example, if a block size of a transaction processing orderer is 10 and the number of input transactions (for example, TPS) is less than 10, a batch size may be reduced compared to the current or adjusted to 1. Conversely, if the number of input transactions exceeds a block size of a transaction processing orderer, a batch size may be adjusted to increase.

Hereinafter, an exemplary computing device 500 that can implement an apparatus according to various embodiments of the present disclosure (e.g., accelerator 100) will be described with reference to FIG. 14.

FIG. 14 is an example hardware diagram illustrating a computing device 500.

As shown in FIG. 14, the computing device 500 may include one or more processors 510, a bus 550, a communication interface 570, a memory 530, which loads a computer program 591 executed by the processors 510, and a storage 590 for storing the computer program 591. However, FIG. 14 illustrates only the components related to the embodiment of the present disclosure. Therefore, it will be appreciated by those skilled in the art that the present disclosure may further include other general purpose components in addition to the components shown in FIG. 14.

The processor 510 controls overall operations of each component of the computing device 500. The processor 510 may be configured to include at least one of a Central Processing Unit (CPU), a Micro Processor Unit (MPU), a Micro Controller Unit (MCU), a Graphics Processing Unit (GPU), or any type of processor well known in the art. Further, the processor 510 may perform calculations on at least one application or program for executing a method/operation according to various embodiments of the present disclosure. The computing device 500 may have one or more processors.

The memory 530 stores various data, instructions and/or information. The memory 530 may load one or more programs 591 from the storage 590 to execute methods/operations according to various embodiments of the present disclosure. For example, when the computer program 591 is loaded into the memory 530, the logic (or the module) as shown in FIG. 4 may be implemented on the memory 530. An example of the memory 530 may be a RAM, but is not limited thereto.

The bus 550 provides communication between components of the computing device 500. The bus 550 may be implemented as various types of bus such as an address bus, a data bus and a control bus.

The communication interface 570 supports wired and wireless internet communication of the computing device 500. The communication interface 570 may support various communication methods other than internet communication. To this end, the communication interface 570 may be configured to comprise a communication module well known in the art of the present disclosure.

The storage 590 can non-temporarily store one or more computer programs 591. The storage 590 may be configured to comprise a non-volatile memory, such as a Read Only Memory (ROM), an Erasable Programmable ROM (EPROM), an Electrically Erasable Programmable ROM (EEPROM), a flash memory, a hard disk, a removable disk, or any type of computer readable recording medium well known in the art.

The computer program 591 may include one or more instructions, on which the methods/operations according to various embodiments of the present disclosure are implemented. When the computer program 591 is loaded on the memory 530, the processor 510 may perform the methods/operations in accordance with various embodiments of the present disclosure by executing the one or more instructions.

For example, the computer program 591 may comprise instructions to perform an operation of obtaining monitoring information on a transaction failure event occurring in the blockchain network, an operation of adjusting a batch size based on the monitoring information, and an operation of performing batch processing for the one or more individual transactions using the adjusted batch size. In such a case, the accelerator 100 in accordance with some embodiments of the present disclosure may be implemented via the computing device 500.

So far, various embodiments included in the technical features of the present disclosure and effects according to the embodiments have been described with reference to FIGS. 1 to 14. Effects according to the technical features of the present disclosure are not limited to the above mentioned effects. Other effects that are not mentioned will be clearly understood by those skilled in the art from the following description.

The technical features of the present disclosure described with reference to FIGS. 1 to 14 may be implemented as computer readable codes on a computer readable medium. The computer readable recording medium may be, for example, a removable recording medium (CD, DVD, Blu-ray disc, USB storage device, removable hard disk) or a fixed recording medium (ROM, RAM, computer equipped hard disk). The computer program recorded on the computer readable recording medium may be transmitted to other computing device via a network such as internet and installed in the other computing device, thereby being used in the other computing device.

In the above description, it is described that all the components constituting the embodiments of the present disclosure are combined or operated as one, but the technical features of the present disclosure are not limited to these embodiments. That is, within the scope of the present disclosure, all of the components may be selectively combined and operated in one or more combinations.

Although the operations are shown in a specific order in the drawings, it should not be understood that the operations must be performed in the specific order or sequential order shown, or that all the illustrated operations must be executed to achieve the desired results. In certain circumstances, multitasking and parallel processing may be advantageous. Moreover, the separation of the various configurations in the embodiments described above should not be understood as requiring that separation, and it should be understood that the described program components and systems may generally be integrated together into a single software product or packaged into multiple software products.

In concluding the detailed description, those skilled in the art will appreciate that many variations and modifications can be made to the preferred embodiments without substantially departing from the principles of the present invention. Therefore, the disclosed preferred embodiments of the invention are used in a generic and descriptive sense only and not for purposes of limitation.

**Claims**

1. An accelerated transaction processing apparatus (100, 500) comprising:

   - a memory (530) for storing one or more instructions (591) ;
   - a communication interface (570) for communicating with a blockchain network (300), which is capable to process batch transactions; and
   - a processor (510);

   wherein the processor (510) is configured, by executing the one or more instructions (591), to perform operations including:

   - obtaining monitoring information on a transaction failure event occurred in the blockchain network (300);

   - in response to the monitoring information identifying a transaction failure event having occurred due to a transaction timeout, an unsatisfied condition of a smart contract or a Multi Version Concurrency Control(MVCC) conflict, adjusting a batch size to reduce the risk of failure of a batch transaction by

      - determining a failure probability of a transaction based on the monitoring information (S291), and
      - adjusting the batch size based on the determined failure probability (S293); and

   - performing batch processing for one or more individual transactions (11, 13, 15) using the adjusted batch size.

2. The apparatus of claim 1,
   wherein the processor (510) is further configured to:

   - estimate a probability distribution of the failure probability based on the monitoring information, and
   - determine the failure probability based on the estimated probability distribution.

3. The apparatus of claim 1,
   wherein the processor (510) is further configured to:

   - determine a reference batch size corresponding to the determined failure probability by using a predetermined reference batch size information for an expected failure probability of the transaction, and
   - adjust the batch size based on the determined reference batch size,
   - wherein the reference batch size information includes a first reference batch size corresponding to a first expected failure probability, and
   - wherein the first reference batch size is determined based on a processing efficiency score according to a batch size calculated for the first expected failure probability.

4. The apparatus of claim 3,

   wherein the processing efficiency score is calculated based on cost incurred to process a predetermined number of individual transactions, and

   wherein the cost is calculated based on the number of batch transactions generated to process the predetermined number of individual transactions and the number of failed transactions according to the first expected failure probability.

**5.** The apparatus of claim 1,
wherein the processor (510) is further configured to:

    - calculate a processing efficiency score for a plurality of batch sizes based on the determined failure probability, and
    - select a specific batch size among the plurality of batch sizes based on the calculated processing efficiency score.

**6.** A method for accelerated processing one or more individual transactions (11, 13, 15) associated with a blockchain network (300), which is capable to process batch transactions, performed in a computing device, the method comprising:

    - obtaining monitoring information on a transaction failure event occurred in the blockchain network (300);
    - in response to the monitoring information identifying a transaction failure event having occurred due to a transaction timeout, an unsatisfied condition of a smart contract or a Multi Version Concurrency Control(MVCC) conflict, adjusting a batch size to reduce the risk of failure of a batch transaction by

        - determining a failure probability of a transaction based on the monitoring information (S291), and
        - adjusting the batch size based on the determined failure probability (S293); and

    - performing batch processing for the one or more individual transactions (11, 13, 15) using the adjusted batch size.

**7.** A computer program stored on a non-transitory computer-readable recording medium, that when executed by a computing device, performs operations comprising:

    - obtaining monitoring information on a transaction failure event occurred in a blockchain network (300), which is capable to process batch transactions;
    - in response to the monitoring information identifying a transaction failure event having occurred due to a transaction timeout, an unsatisfied condition of a smart contract or a Multi Version Concurrency Control(MVCC) conflict, adjusting a batch size to reduce the risk of failure of a batch transaction by

        - determining a failure probability of a transaction based on the monitoring information (S291), and
        - adjusting the batch size based on the determined failure probability (S293); and

    - performing batch processing for one or more individual transactions (11, 13, 15) using the adjusted batch size.

**Patentansprüche**

**1.** Vorrichtung (100, 500) zur beschleunigten Verarbeitung von Transaktionen, die Folgendes umfasst:

    - einen Speicher (530) zum Speichern einer oder mehrerer Anweisungen (591);
    - eine Kommunikationsschnittstelle (570) zum Kommunizieren mit einem Blockchain-Netz (300), das Stapeltransaktionen verarbeiten kann; und
    - einen Prozessor (510);

wobei der Prozessor (510) konfiguriert ist, durch Ausführen der einen oder mehreren Anweisungen (591), Operationen durchzuführen, die Folgendes umfassen:

    - Gewinnen von Überwachungsinformationen über ein Transaktionsfehlerereignis, das in dem Blockchain-Netz (300) aufgetreten ist;
    - als Reaktion auf die Überwachungsinformationen Identifizieren eines Transaktionsfehlerereignisses, das aufgrund einer Transaktions-Zeitüberschreitung, einer nicht erfüllten Bedingung eines Smart Contracts oder eines Multi-Version-Concurrency-Control-Konflikts (MVCC-Konflikt) aufgetreten ist, Einstellen einer Stapelgröße, um das Fehlerrisiko einer Stapeltransaktion zu verringern durch:

        - Bestimmen einer Fehlerwahrscheinlichkeit einer Transaktion basierend auf den Überwachungsinformationen (S291), und
        - Einstellen der Stapelgröße basierend auf der bestimmten Fehlerwahrscheinlichkeit (S293); und

    - Durchführen einer Stapelverarbeitung für eine oder mehrere einzelne Transaktionen (11, 13, 15) unter Verwendung der eingestellten Stapelgröße.

**2.** Vorrichtung nach Anspruch 1,
wobei der Prozessor (510) ferner konfiguriert ist:

    - eine Wahrscheinlichkeitsverteilung der Fehlerwahrscheinlichkeit basierend auf den Überwachungsinformationen zu schätzen und
    - die Fehlerwahrscheinlichkeit basierend auf der geschätzten Wahrscheinlichkeitsverteilung zu bestimmen.

**3.** Vorrichtung nach Anspruch 1,
wobei der Prozessor (510) ferner konfiguriert ist:

- eine Referenz-Stapelgröße entsprechend der bestimmten Fehlerwahrscheinlichkeit durch Verwenden von vorgegebenen Referenz-Stapelgrößeninformationen für eine erwartete Fehlerwahrscheinlichkeit der Transaktion zu bestimmen, und
- die Stapelgröße basierend auf der bestimmten Referenz-Stapelgröße einzustellen,
- wobei die Referenz-Stapelgrößeninformationen eine erste Referenz-Stapelgröße entsprechend einer ersten erwarteten Fehlerwahrscheinlichkeit enthält, und
- wobei die erste Referenz-Stapelgröße basierend auf einer Bewertung der Verarbeitungseffizienz entsprechend einer Stapelgröße, die für die erste erwartete Fehlerwahrscheinlichkeit berechnet worden ist, bestimmt wird.

**4.** Vorrichtung nach Anspruch 3,

wobei die Bewertung der Verarbeitungseffizienz basierend auf den Kosten berechnet wird, die angefallen sind, um eine vorgegebene Anzahl von einzelnen Transaktionen zu verarbeiten, und
wobei die Kosten basierend auf der Zahl von Stapeltransaktionen, die erzeugt worden sind, um die vorgegebene Zahl von einzelnen Transaktionen zu verarbeiten, und der Zahl der fehlgeschlagenen Transaktionen entsprechend der ersten erwarteten Fehlerwahrscheinlichkeit berechnet werden.

**5.** Vorrichtung nach Anspruch 1,
wobei der Prozessor (510) ferner konfiguriert ist:

- eine Bewertung der Verarbeitungseffizienz für mehrere Stapelgrößen basierend auf der vorgegebenen Fehlerwahrscheinlichkeit zu berechnen, und
- eine spezifische Stapelgröße unter den mehreren Stapelgrößen basierend auf der berechneten Bewertung der Verarbeitungseffizienz auszuwählen.

**6.** Verfahren zum beschleunigten Verarbeiten einer oder mehrerer einzelner Transaktionen (11, 13, 15), die einem Blockchain-Netz (300) zugeordnet sind, das Stapeltransaktionen verarbeiten kann, das in einer Rechenvorrichtung durchgeführt wird, wobei das Verfahren Folgendes umfasst:

- Gewinnen von Überwachungsinformationen über ein Transaktionsfehlerereignis, das in dem Blockchain-Netz (300) aufgetreten ist;
- als Reaktion auf die Überwachungsinformationen Identifizieren eines Transaktionsfehlerereignisses, das aufgrund einer Transaktions-Zeitüberschreitung, einer nicht erfüllten Bedingung eines Smart Contracts oder eines Multi-Version-Concurrency-Control-Konflikts (MVCC-Konflikt) aufgetreten ist, Einstellen einer Stapelgröße, um das Fehlerrisiko einer Stapeltransaktion zu verringern durch:

- Bestimmen einer Fehlerwahrscheinlichkeit einer Transaktion basierend auf den Überwachungsinformationen (S291), und
- Einstellen der Stapelgröße basierend auf der bestimmten Fehlerwahrscheinlichkeit (S293); und

- Durchführen von Stapelverarbeitung für die eine oder die mehreren einzelnen Transaktionen (11, 13, 15) unter Verwendung der eingestellten Stapelgröße.

**7.** Computerprogramm, das auf einem nichtflüchtigen computerlesbaren Aufzeichnungsmedium gespeichert ist, das dann, wenn es von einer Rechenvorrichtung ausgeführt wird, Operationen durchführt, die Folgendes umfassen:

- Gewinnen von Überwachungsinformationen über ein Transaktionsfehlerereignis, das in einem Blockchain-Netz (300) aufgetreten ist, das Stapeltransaktionen verarbeiten kann;
- als Reaktion auf die Überwachungsinformationen Identifizieren eines Transaktionsfehlerereignisses, das aufgrund einer Transaktions-Zeitüberschreitung, einer nicht erfüllten Bedingung eines Smart Contracts oder eines Multi-Version-Concurrency-Control-Konflikts (MVCC-Konflikt) aufgetreten ist, Einstellen einer Stapelgröße, um das Fehlerrisiko einer Stapeltransaktion zu verringern durch:

- Bestimmen einer Fehlerwahrscheinlichkeit einer Transaktion basierend auf den Überwachungsinformationen (S291), und
- Einstellen der Stapelgröße basierend auf der bestimmten Fehlerwahrscheinlichkeit (S293); und

- Durchführen von Stapelverarbeitung für eine oder mehrere einzelne Transaktionen (11, 13, 15) unter Verwendung der eingestellten Stapelgröße.

**Revendications**

1. Appareil (100, 500) de traitement accéléré de transactions, comprenant :

   - une mémoire (530) pour stocker une ou plusieurs instructions (591) ;
   - une interface de communication (570) pour communiquer avec un réseau de blockchain (300), capable de traiter des transactions par lot ; et
   - un processeur (510) ;

   le processeur (510) étant configuré, en exécutant les une ou plusieurs instructions (591), pour réaliser des opérations comportant :

   - l'obtention d'informations de surveillance sur un événement d'échec de transaction survenu dans le réseau de blockchain (300) ;
   - en réponse au fait que les informations de surveillance identifient un événement d'échec de transaction qui est survenu suite à l'expiration d'une temporisation de transaction, à une condition non satisfaite d'un contrat intelligent ou à un conflit de type MVCC (Multi Version Concurrency Control), l'ajustement d'une taille de lot dans le but de réduire le risque d'échec d'une transaction par lot par

      - la détermination d'une probabilité d'échec d'une transaction sur la base des informations de surveillance (S291), et
      - l'ajustement de la taille de lot sur la base de la probabilité d'échec déterminée (S293) ; et

   - la réalisation d'un traitement par lot pour une ou plusieurs transactions individuelles (11, 13, 15) à l'aide de la taille de lot ajustée.

2. Appareil selon la revendication 1, dans lequel le processeur (510) est configuré en outre pour :

   - estimer une distribution de probabilités de la probabilité d'échec sur la base des informations de surveillance, et
   - déterminer la probabilité d'échec sur la base de la distribution de probabilités estimée.

3. Appareil selon la revendication 1, dans lequel le processeur (510) est configuré en outre pour :

   - déterminer une taille de lot de référence correspondant à la probabilité d'échec déterminée à l'aide d'informations de taille de lot de référence prédéterminées pour une probabilité d'échec attendue de la transaction, et
   - ajuster la taille de lot sur la base de la taille de lot de référence déterminée,
   - les informations de taille de lot de référence comportant une première taille de lot de référence correspondant à une première probabilité d'échec attendue, et
   - la première taille de lot de référence étant déterminée sur la base d'un score d'efficacité de traitement selon une taille de lot calculée pour la première probabilité d'échec attendue.

4. Appareil selon la revendication 3,

   dans lequel le score d'efficacité de traitement est calculé sur la base d'un coût encouru pour traiter un nombre prédéterminé de transactions individuelles, et
   dans lequel le coût est calculé sur la base du nombre de transactions par lot générées pour traiter le nombre de transactions individuelles et du nombre prédéterminé de transactions qui ont échoué selon la première probabilité d'échec attendue.

5. Appareil selon la revendication 1, dans lequel le processeur (510) est configuré en outre pour :

   - calculer un score d'efficacité de traitement pour une pluralité de tailles de lot sur la base de la probabilité d'échec déterminée, et
   - sélectionner une taille de lot particulière parmi la pluralité de tailles de lot sur la base du score d'efficacité de traitement calculé.

6. Procédé de traitement accéléré d'une ou de plusieurs transactions individuelles (11, 13, 15) associées à un réseau de blockchain (300), capable de traiter des transactions par lot, réalisé dans un dispositif informatique, le procédé comprenant :

   - l'obtention d'informations de surveillance sur un événement d'échec de transaction survenu dans le réseau de blockchain (300) ;
   - en réponse au fait que les informations de surveillance identifient un événement d'échec de transaction qui est survenu suite à l'expiration d'une temporisation de transaction, à une condition non satisfaite d'un contrat intelligent ou à un conflit de type MVCC (Multi Version Concurrency Control), l'ajustement d'une taille de lot dans le but de réduire le risque d'échec d'une transaction par lot par

      - la détermination d'une probabilité d'échec d'une transaction sur la base des informations de surveillance (S291), et
- l'ajustement de la taille de lot sur la base de la probabilité d'échec déterminée (S293) ; et

- la réalisation d'un traitement par lot pour une ou plusieurs transactions individuelles (11, 13, 15) à l'aide de la taille de lot ajustée.

7. Programme d'ordinateur, stocké sur un support d'enregistrement non transitoire lisible par ordinateur, qui, lorsqu'il est exécuté par un dispositif informatique, réalise des opérations comprenant :

- l'obtention d'informations de surveillance sur un événement d'échec de transaction survenu dans un réseau de blockchain (300), capable de traiter des transactions par lot ;
- en réponse au fait que les informations de surveillance identifient un événement d'échec de transaction qui est survenu suite à l'expiration d'une temporisation de transaction, à une condition non satisfaite d'un contrat intelligent ou à un conflit de type MVCC (Multi Version Concurrency Control), l'ajustement d'une taille de lot dans le but de réduire le risque d'échec d'une transaction par lot par

- la détermination d'une probabilité d'échec d'une transaction sur la base des informations de surveillance (S291), et
- l'ajustement de la taille de lot sur la base de la probabilité d'échec déterminée (S293) ; et

- la réalisation d'un traitement par lot pour une ou plusieurs transactions individuelles (11, 13, 15) à l'aide de la taille de lot ajustée.

FIG. 1

FIG. 2

FIG. 3

FIG. 4

blockchain network 300

200a

blockchain node#1 230a

Ledger
A=1
B=2
C=3

210a processing module

200b

blockchain node#2 230b

Ledger
A=1
B=2
C=3

210b processing module

④ process the batch transaction
(record a status in a ledger)

③ request to process the batch transaction

B-Tx 30

⑤ provide a processing result

Accelerator 100

② generate a batch transaction

$Tx_{w1}$ | $Tx_{w2}$ | $Tx_{w3}$

30

① request to process a transaction

$Tx_{w1}=(A=1)$
$Tx_{w2}=(B=2)$
$Tx_{w3}=(C=3)$

client terminal (400)

⑥ provide the processing result to a corresponding client terminal

FIG. 5

FIG. 6

FIG. 7

FIG. 8

61

Tx$_1$ | A =1 |    ① transaction processing
                     request

62                              100          64

Tx$_2$ | B =20 |    →    | Accelerator |    | B-Tx$_1$ |

Tx$_n$ | C =10 |

63

B-Tx = {A=1, B=20, C=10}

200

BLOCKCHAIN NODE

65

if (input < 10)   Error
else              Success

③ performing endorsement

66

A=1 -> Error
B=20 -> Failure
C=10 -> Failure

④ faiure event occuring notice

FIG. 9

S200

determining whether blockchain network
is in congested state — S210

S230

N — congested? — Y

S250

reducing batch size

S270

determining
for transaction
failure probability

S290

adjusting batch size
based on failure
probablity

FIG. 10

S290

determining optimal batch size
corresponding to failure probability
S291

adjusting current batch size using
optimal batch size
S293

FIG. 11

70

PRCESSING EFFICENCY SCORE ACCORDING TO BATCH SIZE
(p = 10%)

optimal 71

FIG. 12

80

OPTIMAL BATCH SIZE ACCORDING TO FAILURE PROBABLITY

81

FIG. 13

500

550

510

processor

570

communication interface

B
U
S

530

memory

computer program

591

590

storage

computer program

591

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190061176

- US 2018300382 A1